# EUROPEAN PATENT APPLICATION

(11) **EP 3 779 355 A1**
(43) Date of publication of application: **17.02.2021**
(21) Application number: 19775118.3
(22) Date of filing: 11.03.2019
(51) Int. Cl.: G01B 11/245

(54) **THREE-DIMENSIONAL MEASUREMENT DEVICE FOR LINEAR OBJECT AND THREE-DIMENSIONAL MEASUREMENT METHOD FOR LINEAR OBJECT**

(30) Priority: 30.03.2018 JP 2018068326
(71) Applicant: Kurashiki Boseki Kabushiki Kaisha, Kurashiki-shi, Okayama 710-0054 (JP)
(72) Inventor: KITAI, Motoyoshi, Neyagawa-shi, Osaka 572-0823 (JP); SATO, Toshihisa, Neyagawa-shi, Osaka 572-0823 (JP)
(74) Representative: Becker, Eberhard
(86) International application number: PCT/JP2019/009721
(87) International publication number: WO 2019/188198

(57) **Abstract**

This three-dimensional measurement device for a linear object comprises: a stereo camera (11) that images a linear object; a transmission-light emission member (50) positioned opposite the stereo camera (11) with the linear object therebetween; and an operation unit that acquires the three-dimensional shape of the linear object. The stereo camera (11) acquires a transmission-light image of the linear object onto which light from the transmission-light emission member (50) has been emitted, and the operation unit acquires the three-dimensional shape of the linear object on the basis of the transmission-light image.

## Description

### TECHNICAL FIELD

The present invention relates to a device and method for three-dimensionally and stereoscopically measuring the shape of a linear object, such as a wire and cable.

### BACKGROUND ART

A stereoscopic method for three-dimensional measurement has been conventionally used to measure a three-dimensional position using the parallax between two cameras. In this method, a corresponding point, corresponding to a point to be measured (measurement point), is determined on each of two images captured from different point of sights. Then, using the principle of triangulation, the three-dimensional position of the measurement point is calculated from the corresponding point on each image and from the positional relationship between the two cameras. In such a stereoscopic method, a matching process for identifying a corresponding point on each image constitutes the largest information processing load and the highest cost. Accordingly, various methods have been proposed for improving the matching process.

Japanese Patent Laying-Open No. 5-026640 (PTL 1) describes a method for three-dimensionally and stereoscopically measuring a linear object, specifically, a method for measuring the shape of an external lead of a semiconductor package. In this method, a measurement sampling point is determined on an external lead image in one image. Then, in the other image, the intersection point between an epipolar line and the external lead image is determined as a corresponding point that corresponds to the measurement sampling point. Given a straight line that connects the point of sight of one image and the measurement point, the epipolar line refers to the straight line projected on the other image. The measurement point is always projected on the epipolar line on the other image.

Japanese Patent Laying-Open No. 2-309202 (PTL 2) describes determining a corresponding point by imaging multiple linear objects with two cameras and comparing features (i.e., the slopes of and the distances between emission lines) between the two images.

### CITATION LIST

### PATENT LITERATURE

PTL 1: Japanese Patent Laying-Open No. 5-026640
PTL 2: Japanese Patent Laying-Open No. 2-309202

### SUMMARY OF INVENTION

### TECHNICAL PROBLEM

However, in the method described in PTL 1, if a screen includes a plurality of similar linear objects, a plurality of intersection points are formed between an epipolar line and the linear objects. In this case, a corresponding point may not be uniquely identified. The method described in PTL 2, which needs to calculate the degree of disparity in feature for a plurality of emission lines, is not suitable for high-speed processing and also entails a risk of false recognition between straight lines having a similar feature.

Further, a linear object having a pattern or color unevenness may cause image distortion due to reflected light. Such a linear object may not be accurately recognized in an image.

In view of the above, an object of the present invention is to provide a device and method for three-dimensionally measuring a linear object that can perform a more accurate, high-speed matching process on a linear object.

### SOLUTION TO PROBLEM

A device for three-dimensionally measuring a linear object described herein includes: a stereo camera that images a linear object; a transmission-light illuminator facing the stereo camera so that the linear object is placed between the transmission-light illuminator and the stereo camera; and an arithmetic device that acquires a three-dimensional shape of the linear object. The stereo camera acquires a transmitted-light image of the linear object captured while the linear object is illuminated by the transmission-light illuminator. The arithmetic device acquires the three-dimensional shape of the linear object based on the transmitted-light image.

The transmitted light as used herein includes light that reaches the camera, without being blocked by a linear object, through the space other than the linear object (the light is also referred to as backlight or backside illumination). That is, the transmitted light is not limited to light passing through an object. The transmitted-light image as used herein refers to an image formed by capturing the transmitted light with the camera (the image is also referred to as a backlight image or backside illumination image).

In another embodiment, the stereo camera acquires a reflected-light image of the linear object captured while the linear object is not illuminated by the transmission-light illuminator. The arithmetic device acquires the three-dimensional shape of the linear object based on the transmitted-light image and the reflected-light image.

In another embodiment, the stereo camera includes a first camera and a second camera. The stereo camera acquires a first reflected-light image and a second reflected-light image of the linear object, wherein the first and second reflected-light images are respectively captured by the first and second cameras while the linear object is not illuminated by the transmission-light illuminator. The stereo camera acquires a first transmitted-light image and a second transmitted-light image of the linear object, wherein the first and second transmitted-light images are respectively captured by the first and second cameras while the linear object is illuminated by the transmission-light illuminator. The arithmetic device acquires a first supplemented image using the first reflected-light image and the first transmitted-light image. The arithmetic device acquires a second supplemented image using the second reflected-light image and the second transmitted-light image. The arithmetic device acquires the three-dimensional shape of the linear object using the first supplemented image and the second supplemented image.

In another embodiment, each of the first camera and the second camera is a color camera.

In another embodiment, the transmission-light illuminator has a function of changing a color of light to illuminate the linear object.

In another embodiment, the stereo camera acquires the first transmitted-light image and the second transmitted-light image while the transmission-light illuminator illuminates the linear object with light having a different color from the linear object.

A method for three-dimensionally measuring a linear object described herein includes: acquiring a first reflected-light image and a second reflected-light image of a linear object, wherein the first reflected-light image is captured by a first camera in a first position, and the second reflected-light image is captured by a second camera in a second position different from the first position; acquiring a first transmitted-light image and a second transmitted-light image of the linear object, wherein the first and second transmitted-light images are respectively captured by the first and second cameras while the linear object is illuminated by a transmission-light illuminator, the transmission-light illuminator facing the first and second cameras so that the linear object is placed between the transmission-light illuminator and the first and second cameras; acquiring a first supplemented image using the first reflected-light image and the first transmitted-light image; acquiring a second supplemented image using the second reflected-light image and the second transmitted-light image; and acquiring a three-dimensional shape of the linear object using the first supplemented image and the second supplemented image.

In another embodiment, the linear object includes a plurality of lines. The transmission-light illuminator illuminates the plurality of lines with light having a different color from any of the plurality of lines.

In another embodiment, the transmission-light illuminator is a color illuminator.

### ADVANTAGEOUS EFFECTS OF INVENTION

The present invention can provide a device and method for three-dimensionally measuring a linear object that can perform a more accurate, high-speed matching process on a linear object.

### BRIEF DESCRIPTION OF DRAWINGS

Fig. 1 is a functional block diagram of a device for three-dimensional measurement in embodiment 1.
Fig. 2 is a first diagram for explaining a method for three-dimensional measurement in embodiment 1.
Fig. 3 is a second diagram for explaining the method for three-dimensional measurement in embodiment 1.
Fig. 4 is a process flowchart of the method for three-dimensional measurement in embodiment 1.
Fig. 5 is a first reflected-light image captured by a stereo camera in embodiment 1.
Fig. 6 is a second reflected-light image captured by the stereo camera in embodiment 1.
Fig. 7 is an operation flowchart of a first line image extraction process in the method for three-dimensional measurement in embodiment 1.
Fig. 8 is a first reflected-light image with an extracted first line image.
Fig. 9 is a second reflected-light image with an extracted second line image.
Fig. 10 is a first reflected-light image with a selected point of interest.
Fig. 11 is a second reflected-light image with a determined intersection point between an epipolar line and a second line image.
Fig. 12 is an example color table.
Fig. 13 is a functional block diagram showing a process for determining a three-dimensional shape (supplemented 3D image) in embodiment 2.

### DESCRIPTION OF EMBODIMENTS

A method and device for three-dimensionally measuring a linear object in each embodiment according to the present invention will now be described with reference to the drawings. In the following, the method for three-dimensionally measuring a linear object may be simply referred to as a "measurement method", and the device for three-dimensionally measuring a linear object may be simply referred to as a "measurement device".

In the embodiments described hereinafter, when reference is made to the number, quantity and the like, the scope of the present invention is not necessarily limited to the number, quantity and the like, unless otherwise noted. Identical or corresponding parts are denoted by identical reference signs, and the redundant description is not repeated in some cases. It is assumed from the start that the features in the embodiments may be combined as appropriate. For easy understanding of the structure, some parts in the drawings are not in accordance with the actual dimensional ratio but with a different ratio.

### (Embodiment 1)

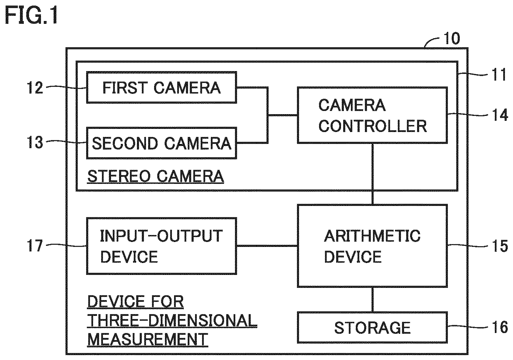

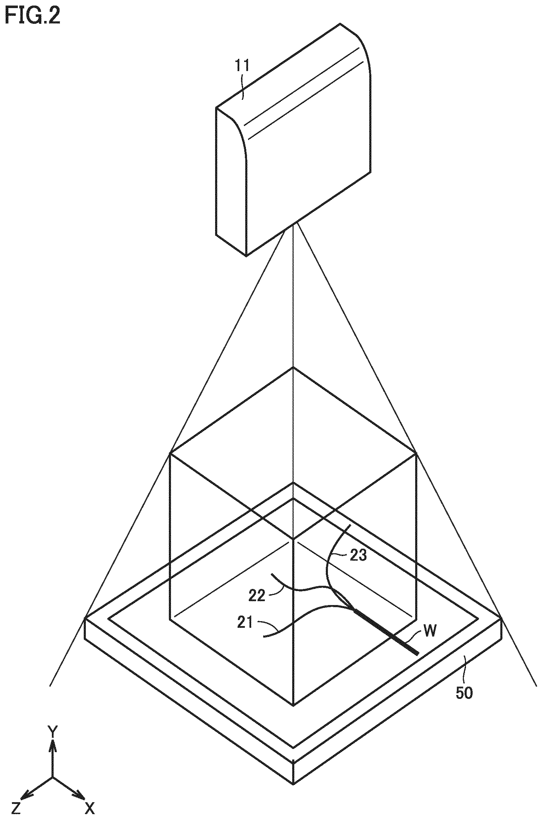

A method and device for three-dimensionally measuring a linear object in this embodiment will now be described with reference to Figs. 1 and 2. Fig. 1 is a functional block diagram of a device for three-dimensional measurement. Fig. 2 is a first diagram for explaining a method for three-dimensional measurement.

The following embodiment uses a wire harness W as an example linear object. This wire harness W includes electric wires 21 to 23 as "lines".

A measurement device 10 in this embodiment includes a stereo camera 11, an arithmetic device 15, a storage 16, and an input-output device 17. Arithmetic device 15 may be a personal computer or image processor separate from stereo camera 11, or may be hardware having an arithmetic function and built in the stereo camera. As shown in Fig. 2, stereo camera 11 is used to capture images of electric wires 21 to 23 included in wire harness W. This measurement device 10 includes a transmission-light illuminator 50 facing stereo camera 11 so that wire harness W is placed between transmission-light illuminator 50 and stereo camera 11. This transmission-light illuminator 50 will be described in detail in embodiment 2.

Stereo camera 11 includes a first camera 12, a second camera 13, and a camera controller 14. First camera 12 is a color camera that captures a first reflected-light image, which is a two-dimensional color image. Second camera 13 is a color camera that captures a second reflected-light image, which is a two-dimensional color image. Second camera 13 is fixed in position relative to the first camera. Camera controller 14 controls the first and second cameras and communicates with arithmetic device 15. For example, the camera controller receives an image-capturing instruction from the arithmetic device, transmits the image-capturing instruction to the first and second cameras, and transfers the first and second reflected-light images to the arithmetic device.

Arithmetic device 15 communicates with camera controller 14. Also, arithmetic device 15 processes the first and second reflected-light images received from stereo camera 11 and calculates the three-dimensional position (3D image) of a linear object. Storage 16 stores the first and second reflected-light images captured by the stereo camera, and a color table of objects. Storage 16 also stores the intermediate data required for arithmetic processing, and arithmetic results. Input-output device 17 receives instructions from the operator and displays measurement results to the operator.

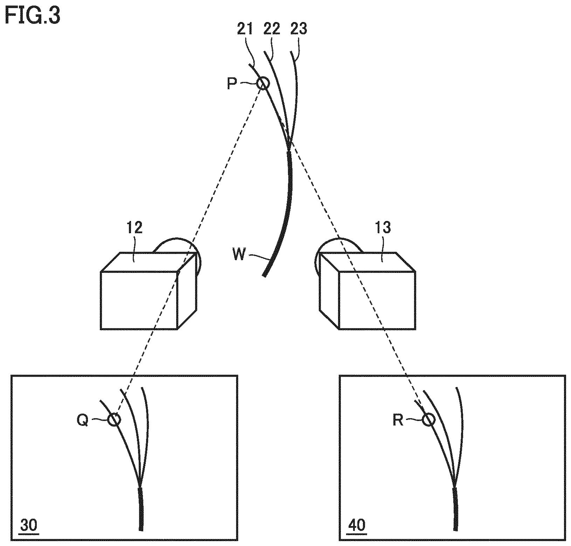

With reference to Fig. 3, in a measurement method in this embodiment, images of electric wires 21 to 23 are captured by first and second cameras 12 and 13. The three-dimensional position of a certain point P on electric wire 21 can be calculated from a projected point Q, a projected point R, and the positional information of first and second cameras 12 and 13 which are already known. Specifically, projected point Q is a projection of point P on first reflected-light image 30 captured by the first camera. Projected point R is a projection of point P on second reflected-light image 40 captured by the second camera. The positional information of first and second cameras 12 and 13 can be acquired by calibrating the two cameras beforehand.

Three electric wires 21 to 23 to be measured, though shown in black and white in Fig. 3, are color-coded, for example, having coverings of different colors (e.g., red, blue, and yellow). The object to be measured may be any linear object. The object is preferably a linear object that includes lines having different colors, more preferably a cable that includes color-coded electric wires or optical fiber lines, still more preferably a cable or wire harness.

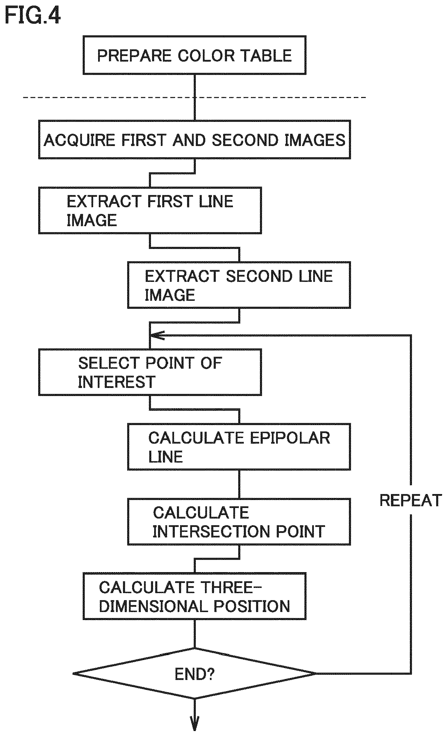

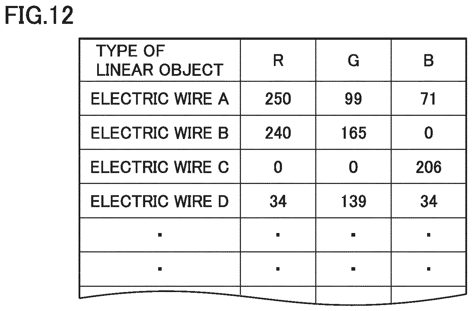

Fig. 4 shows a flowchart of a measurement method in this embodiment. Each process will now be described. Before the measurement, a color table is prepared. The color table is a table that records colors in association with different types of linear objects to be potentially measured. Fig. 12 shows an example color table in which different types of electric wires are associated with their colors represented by the luminance values of the three primary colors: red, green, and blue (RGB). The color table is stored in storage 16.

At the time of measurement, stereo camera 11 images electric wires 21 to 23. Specifically, first camera 12 images electric wires 21 to 23 to produce first reflected-light image 30. At the same time, second camera 13 images electric wires 21 to 23, from a point of sight different from that of the first camera, to produce second reflected-light image 40. The first and second reflected-light images are transferred to arithmetic device 15 to be stored in storage 16.

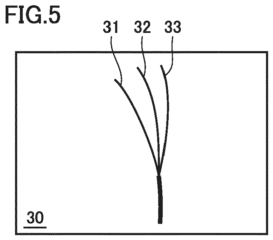

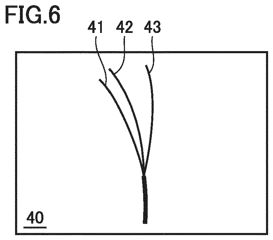

Arithmetic device 15 acquires first and second reflected-light images 30 and 40 from stereo camera 11. At this time, first reflected-light image 30 includes images 31 to 33 of three electric wires 21 to 23, with reference to Fig. 5. Similarly, second reflected-light image 40 includes images 41 to 43 of three electric wires 21 to 23, with reference to Fig. 6.

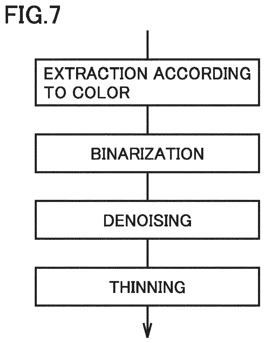

Arithmetic device 15 extracts a particular electric wire 21 as a first line image from first reflected-light image 30. With reference to Fig. 7, the process of extracting the first line image (first line image extraction process) includes an extraction operation according to color, a binarization operation, a denoising operation, and a thinning operation.

In the extraction operation according to color, the arithmetic device acquires, from the color table, the color of a measurement object (electric wire 21). The arithmetic device then extracts, from first reflected-light image 30, only the image 31 of linear object 21 having the particular color, and determines the extracted image as first line image 34. Specifically, the arithmetic device compares the color of each pixel of first reflected-light image 30 with the particular color. A pixel is left when determined to have the same color as the particular color, whereas a pixel is removed when determined to have a different color from the particular color.

Whether the colors are the same or different may be determined by whether their difference is equal to or less than a predetermined value or not. For example, arithmetic device 15 acquires the RGB values corresponding to electric wire 21 from the color table, and compares the RGB values of each pixel of first reflected-light image 30 with the acquired RGB values. When the difference between the values is equal to or less than a predetermined value for each of RGB, the pixel is determined to have the same color as electric wire 21. The predetermined value may be determined considering the number of shades of RGB, the degree of color difference between different types of electric wires, or other factors.

Next, first reflected-light image 30 is binarized. This operation replaces the value of each pixel with 0 or 1 using an appropriate threshold value. The binarization operation simplifies the subsequent image processing. The binarization operation may be performed simultaneously with the extraction operation according to color. The binarization can be achieved by setting 1 to a pixel determined to have the same color, and 0 to a pixel determined to have a different color.

Next, first reflected-light image 30 is denoised. After first line image 34 is extracted through the extraction operation according to color, first reflected-light image 30 may still include isolated pixels due to shot noise of the camera. Further, RGB image sensors may be actually slightly misaligned for each pixel. This may cause an inaccurate color of an image at a portion where the color steeply changes, such as the outline of each of electric wire images 31 to 33. In this case, isolated pixels may still be left. Removing such pixels can yield a more accurate first line image 34.

Next, first line image 34 is thinned. This operation thins the line thickness to one pixel while maintaining the continuity of the first line image. Any of known methods may be used for this thinning operation, such as selecting the pixels at the center of the line thickness. This operation simplifies the subsequent image processing and also allows accurate determination of a corresponding point.

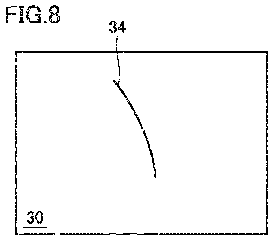

Fig. 8 shows first line image 34 obtained. First reflected-light image 30 with the extracted first line image is stored in storage 16.

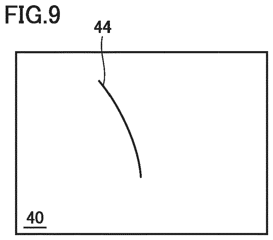

Returning to Fig. 4, second line image 44 is extracted by processing second reflected-light image 40 with the operations similar to those for first reflected-light image 30 (second line image extraction process). Fig. 9 shows second line image 44 obtained. Second reflected-light image 40 with the extracted second line image is stored in storage 16.

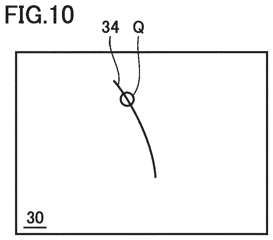

Next, with reference to Fig. 10, arithmetic device 15 selects a point Q of interest on first line image 34 of first reflected-light image 30. Point Q is a projection of point P (Fig. 2) of electric wire 21, on the first reflected-light image.

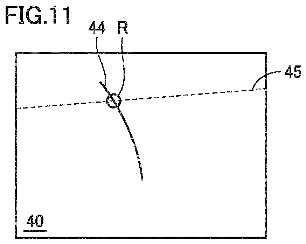

Next, with reference to Fig. 11, arithmetic device 15 determines an epipolar line 45 on second reflected-light image 40. Epipolar line 45 is a line that corresponds to point Q of interest of first reflected-light image 30. Arithmetic device 15 determines intersection point R between second line image 44 and epipolar line 45, and determines this intersection point R to be a point that corresponds to point Q of interest. Point R is a projection of point P (Fig. 3) of electric wire 21, on the second reflected-light image.

Through these processes, the arithmetic device determines projected point Q on first reflected-light image 30 and projected point R on second reflected-light image 40 for point P of electric wire 21 shown in Fig. 3. From these points, the arithmetic device calculates the three-dimensional position of point P.

Next, the arithmetic device selects a new point of interest on first line image 34, and repeats the processes of after the selection of a point of interest. A new point of interest to be selected may be a point continuous with and adjacent to the last point of interest. In this way, the arithmetic device determines the three-dimensional positions by shifting point Q of interest (i.e., by moving point P on electric wire 21), thereby three-dimensionally measuring electric wire 21.

When necessary information on electric wire 21 has been acquired, the arithmetic device ends the repeated operations described above. A 3D image for electric wire 21 is thus obtained. When the three-dimensional measurement continues on another electric wire (e.g., electric wire 22), the arithmetic device acquires the color of electric wire 22 from the color table and repeats the processes at and after the first line image extraction process on the first and second reflected-light images originally captured by the first and second cameras.

The color table will now be described in more detail.

Fig. 12 shows an example color table in which each type of linear object is associated with one set of RGB values. However, each type of linear object may be associated with a plurality of sets of RGB values. In this case, when an object is determined to have the same color as any of the sets of RGB values of a linear object in the table, then the object may be identified as the linear object. The colors may be recorded in any color systems other than the RGB system. For example, the colors may be represented by L*a*b* based on the CIELAB color system defined by the International Commission on Illumination (CIE). The output from stereo camera 11 represented by RGB values can be easily converted into values in other color systems.

In the embodiment described above, when the difference between the RGB values of a pixel and the RGB values in the color table is equal to or less than a predetermined value, the color of the pixel is determined to be the same as the color in the table. However, the color table may record a color range within which a color is determined to be the same color. For recording such a color range, L*a*b* representation is more preferred because the threshold value ranges for the L*a*b* values can be easily adjusted to achieve robustness against the change in the amount of light. For example, a wider threshold value range may be defined for an L* value; whereas narrower threshold value ranges may be defined for a* and b* values. By doing so, even when a linear object undergoes a certain level of brightness change, its color can be identified without being confused with other cables' colors.

The color table is prepared preferably based on the colors of linear object images actually captured in the actual measurement environment. Specifically, images of a linear object are captured by the first or second camera at various positions and orientations in a human or robot hand. From the images, the color information on the linear object is acquired. The color of a linear object on the first and second reflected-light images varies depending on various factors, including the type and layout of an illuminator in the measurement environment, and the glossiness and orientation of the linear object. If the color table records possible color ranges of linear object images under the actual measurement conditions, the risk of false recognition can be reduced when the linear object is extracted.

### (Embodiment 2)

As shown in Fig. 2, stereo camera 11 is used to acquire the three-dimensional positions (3D images) of electric wires 21 to 23. For acquiring first and second reflected-light images 30 and 40, natural light or an ordinary lighting device is used to image electric wires 21 to 23. In some cases, white powder called talc, which was used in the manufacturing process, adheres to the surfaces of electric wires 21 to 23.

If electric wires 21 to 23 are imaged while talc remains thereon, white regions with the adhering talc may reflect light more strongly than other regions, causing color unevenness in first and second reflected-light images 30 and 40. In addition to such adhering talc, any poor coloring of individual electric wires may be the cause of color unevenness in first and second reflected-light images 30 and 40.

The color unevenness of images may cause "color skipping", making the identification of the linear object difficult.

A recovery process, such as removing the adhering talc and correcting poorly-colored portions of the electric wires, is troublesome. In particular, in automatic processes using a robot hand, such as detecting the position and color of a wire harness, the recovery process may stop the process flow and significantly reduce the work efficiency of the automated processes.

Accordingly, this embodiment uses transmission-light illuminator 50 facing stereo camera 11 so that wire harness W is placed between transmission-light illuminator 50 and stereo camera 11, as shown in Fig. 2. Transmission-light illuminator 50 is used as a backlight (backside illuminator) to produce a sharply defined linear object image, thereby enabling image correction of color-skipped portions.

Transmission-light illuminator 50 may be any device or member that can image the silhouette of a linear object. For example, transmission-light illuminator 50 may be a lighting device or a reflector. The lighting device may be any commonly used light and is particularly preferably an area light, which can uniformly illuminate a field of view of a camera. The reflector may be made of a variety of materials that cause diffuse reflection at the surface, such as paper, cloth, and resin. In particular, the reflector is preferably a reflector plate, which provides almost uniform diffuse reflection. The reflector may be flexible and rolled to make colors switchable. The reflector may be designed to retract by sliding or rotating to the outside of a field of view when not in use. In the case of a reflector that does not emit light itself, ambient light (e.g., indoor light) may be used as a light source. An additional lighting device may be provided to illuminate a reflector.

Illumination with light from the transmission-light illuminator includes both cases in which the transmission-light illuminator itself emits light, and in which the transmission-light illuminator indirectly provides light using a reflector plate or the like.

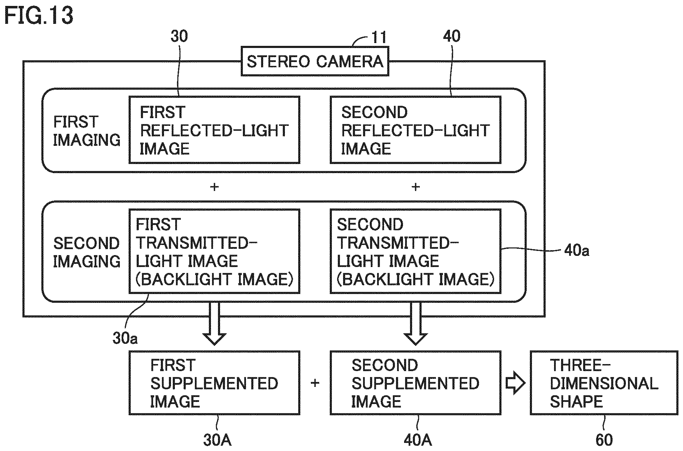

With reference to Fig. 13, a method and device for three-dimensionally measuring a linear object in this embodiment will now be described. Fig. 13 is a functional block diagram showing a process for determining a three-dimensional shape (supplemented 3D image) in this embodiment.

As in embodiment 1, stereo camera 11 is used to acquire first and second reflected-light images 30 and 40. In acquiring first and second reflected-light images 30 and 40, a linear object may be illuminated with ambient light (e.g., indoor light or sunlight). To acquire the reflected-light images more stably, a reflection-light illuminator is preferably used to illuminate a linear object. The reflection-light illuminator may be any commonly used illuminator, such as a lamp or LED. The reflection-light illuminator is preferably a diffuse illuminator that can uniformly illuminate a linear object from the same side as stereo camera 11.

Then, backlight imaging is performed with light from transmission-light illuminator 50 to stereo camera 11. This produces a first transmitted-light image 30a and a second transmitted-light image 40a where sharply defined electric wires appear. These images are then stored in storage 16.

Arithmetic device 15 uses first reflected-light image 30 and first transmitted-light image 30a to produce a first supplemented image 30A. Specifically, arithmetic device 15 supplements a broken region of the linear object in first reflected-light image 30 with first transmitted-light image 30a to produce first supplemented image 30A. Similarly, arithmetic device 15 uses second reflected-light image 40 and second transmitted-light image 40a to produce a second supplemented image 40A. Specifically, arithmetic device 15 supplements a broken region of the linear object in second reflected-light image 40 with second transmitted-light image 40a to produce second supplemented image 40A. Using first and second supplemented images 30A and 40A thus obtained, arithmetic device 15 calculates a three-dimensional shape 60 of the linear object.

In this embodiment, each of the first and second cameras is a monochrome or color camera. To use the color information of images for acquiring the three-dimensional shape of a linear object, a color camera is preferably used.

### (Transmission-Light Illuminator 50)

In the embodiment described above, if electric wires 21 to 23 constituting wire harness W have coverings of red, blue, and yellow, transmission-light illuminator 50 may use an ordinary light source to generate the silhouettes of electric wires 21 to 23. However, if the electric wires are, for example, white, their silhouettes may not be appropriately obtained.

To address this, the light source of transmission-light illuminator 50 may have a color other than the colors of the coverings of electric wires 21 to 23. This allows sharply defined silhouettes of electric wires 21 to 23 to be generated. Therefore, transmission-light illuminator 50 preferably has a function of changing the color of light to illuminate a linear object.

Transmission-light illuminator 50 may use red, green, and blue (RGB) light sources. Sequentially illuminating with red, green, and blue (RGB) colors can generate sharply defined silhouettes of electric wires 21 to 23.

For example, a wire harness, composed of multi-colored (red and blue) electric wires, may be imaged using red backlight (transmitted light). In this case, a three-dimensional shape is acquired for only the blue electric wire through binarization using the luminance difference. Without the use of color information (i.e., in the case of monochrome images), a plurality of intersection points are formed between an epipolar line and objects. To determine a correct corresponding point from among the intersection points, geometric or other information may be used. Any prior art may be used as appropriate to determine a corresponding point.

Even with only the two transmitted-light images (first and second transmitted-light images captured by the two cameras of the stereo camera), the three-dimensional shape of a linear object can be determined. In this case, however, the outline of a linear object may not be determined accurately, depending on the conditions of light from transmission-light illuminator 50. The use of supplemented images, which are obtained based on the two reflected-light images (first and second reflected-light images) in addition to the two transmitted-light images, allows more accurate three-dimensional measurement.

Using the supplemented images, a continuous electric wire can be identified even when the electric wire image includes an unevenly colored portion in first and second reflected-light images 30 and 40. Accordingly, in the control of a robot hand for grasping electric wires 21 to 23, when a continuous electric wire is identified in spite of the appearance of an unevenly colored portion, the robot hand can be controlled to grasp the unevenly colored portion based on its positional information.

The measurement method in the embodiments is applicable to not only cables, but also thread and string, writing tools (e.g., colored pencils and ball-point refills), and a variety of other linear objects.

Any of the processes and operations in the embodiments described above may be changed in order or omitted, where possible.

The measurement method in the embodiments does not exclude the combined use of any of known stereoscopic matching methods. If multiple linear objects include linear objects that have the same color, a matching method may be advantageously combined that focuses on the shape or other features of measurement objects.

It should be understood that the embodiments disclosed herein are by way of example in every respect, not by way of limitation. The scope of the present invention is defined not by the above description but by the terms of the claims. It is intended that the scope of the present invention includes any modification within the meaning and the scope equivalent to the terms of the claims.

### REFERENCE SIGNS LIST

10: device for three-dimensionally measuring a linear object; 11: stereo camera; 12: first camera; 13: second camera; 14: camera controller; 15: arithmetic device; 16: storage; 17: input-output device; 21 to 23: electric wire (linear object); 30: first reflected-light image; 30a: first transmitted-light image; 30A: first supplemented image; 31 to 33: images of electric wires 21 to 23 on the first reflected-light image; 34: first line image; 40: second reflected-light image; 40a: second transmitted-light image; 40A: second supplemented image; 41 to 43: image of electric wires 21 to 23 on the second reflected-light image; 44: second line image; 45: epipolar line; 50: transmission-light illuminator; 60: three-dimensional shape (supplemented 3D image); P: point on electric wire 21; Q: projection (point of interest) of point P on the first reflected-light image; R: projection (corresponding point) of point P on the second reflected-light image

## Claims

1. A device for three-dimensionally measuring a linear object, the device comprising:
a stereo camera that images a linear object;
a transmission-light illuminator facing the stereo camera so that the linear object is placed between the transmission-light illuminator and the stereo camera; and
an arithmetic device that acquires a three-dimensional shape of the linear object, wherein
the stereo camera acquires a transmitted-light image of the linear object captured while the linear object is illuminated by the transmission-light illuminator, and
the arithmetic device acquires the three-dimensional shape of the linear object based on the transmitted-light image.

2. The device for three-dimensionally measuring a linear object according to claim 1, wherein
the stereo camera acquires a reflected-light image of the linear object captured while the linear object is not illuminated by the transmission-light illuminator, and
the arithmetic device acquires the three-dimensional shape of the linear object based on the transmitted-light image and the reflected-light image.

3. The device for three-dimensionally measuring a linear object according to claim 1 or 2, wherein
the stereo camera includes a first camera and a second camera,
the stereo camera acquires a first reflected-light image and a second reflected-light image of the linear object, wherein the first and second reflected-light images are respectively captured by the first and second cameras while the linear object is not illuminated by the transmission-light illuminator,
the stereo camera acquires a first transmitted-light image and a second transmitted-light image of the linear object, wherein the first and second transmitted-light images are respectively captured by the first and second cameras while the linear object is illuminated by the transmission-light illuminator,
the arithmetic device acquires a first supplemented image using the first reflected-light image and the first transmitted-light image,
the arithmetic device acquires a second supplemented image using the second reflected-light image and the second transmitted-light image, and
the arithmetic device acquires the three-dimensional shape of the linear object using the first supplemented image and the second supplemented image.

4. The device for three-dimensionally measuring a linear object according to any one of claims 1 to 3, wherein
each of the first camera and the second camera is a color camera.

5. The device for three-dimensionally measuring a linear object according to claim 4, wherein
the transmission-light illuminator has a function of changing a color of light to illuminate the linear object.

6. The device for three-dimensionally measuring a linear object according to claim 5, wherein
the stereo camera acquires the first transmitted-light image and the second transmitted-light image while the transmission-light illuminator illuminates the linear object with light having a different color from the linear object.

7. A method for three-dimensionally measuring a linear object, the method comprising:
acquiring a first reflected-light image and a second reflected-light image of a linear object, wherein the first reflected-light image is captured by a first camera in a first position, and the second reflected-light image is captured by a second camera in a second position different from the first position;
acquiring a first transmitted-light image and a second transmitted-light image of the linear object, wherein the first and second transmitted-light images are respectively captured by the first and second cameras while the linear object is illuminated by a transmission-light illuminator, the transmission-light illuminator facing the first and second cameras so that the linear object is placed between the transmission-light illuminator and the first and second cameras;
acquiring a first supplemented image using the first reflected-light image and the first transmitted-light image;
acquiring a second supplemented image using the second reflected-light image and the second transmitted-light image; and
acquiring a three-dimensional shape of the linear object using the first supplemented image and the second supplemented image.

8. The method for three-dimensionally measuring a linear object according to claim 7, wherein
the linear object includes a plurality of lines, and
the transmission-light illuminator illuminates the plurality of lines with light having a different color from any of the plurality of lines.

9. The method for three-dimensionally measuring a linear object according to claim 7 or 8, wherein
the transmission-light illuminator is a color illuminator.
